# EUROPÄISCHE PATENTSCHRIFT

(11) **EP 1 094 247 B1**
(45) Veröffentlichungstag und Bekanntmachung des Hinweises auf die Patenterteilung: **14.06.2006**
(21) Anmeldenummer: 00120317.3
(22) Anmeldetag: 15.09.2000
(51) Int. Cl.: F16H 55/22, F16H 1/16

(54) **Schneckengetriebeantrieb**
Worm drive
Réducteur à vis sans fin

(30) Priorität: 18.10.1999 DE 29918350 U
(43) Veröffentlichungstag der Anmeldung: 25.04.2001
(73) Patentinhaber: Marantec Antriebs- und Steuerungstechnik GmbH & Co. KG., 33428 Marienfeld (DE)
(72) Erfinder: Hörmann, Michael, 33790 Halle/Westf. (DE)
(74) Vertreter: Laufhütte, Dieter

(56) Entgegenhaltungen:
- DE-A- 19 808 218
- PATENT ABSTRACTS OF JAPAN vol. 005, no. 141 (E-073), 5. September 1981 (1981-09-05) & JP 56 074060 A (MITSUBA DENKI SEISAKUSHO:KK), 19. Juni 1981 (1981-06-19)

## Beschreibung

Die vorliegende Erfindung betrifft einen Schneckengetriebeantrieb mit einer Schneckenwelle und einem damit kämmenden Schneckenrad gemäß dem Oberbegriff von Anspruch 1, wie er aus der DE-A-19808218 bekannt ist.

Mit Schneckengetriebeantrieben können auch schwerere Lasten einfach angetrieben werden. In der Praxis werden sie zum Antrieb von Toren, insbesondere Garagentoren, eingesetzt, auch schwerere Tortechnik kann mit ihnen betätigt werden. Hierbei wirken große Kräfte auf das Schneckengetriebe. Nicht nur die vom Antriebsmotor erzeugte abgegebene Antriebskraft, sondern auch die - zwar durch Federn ausgeglichene - dynamisch rückwirkende Torblattmasse belastet das selbsthemmende Schneckengetriebe.

Andererseits müssen Garagentorantriebe aus Kosten-, Platz- und Gewichtsgründen kleinbauen. Die Schneckenwelle kann bei einer solchen Anwendung nur bleistiftdünn sein.

Ein Problem besteht hierbei darin, daß die Kraft des Antriebsmotors und die pendelnde Torblattmasse derart große sowohl positive als auch negative Drehmomente verursachen, daß die Schneckenwelle aus dem Eingriff des Schneckenrades gelenkt wird. Das Schneckenrad springt über die Verzahnung der Schneckenwelle. Dies passiert trotz Abstützung der Schneckenwelle in einem Gleitlager auf der dem Motor gegenüberliegenden Seite.

Weiterhin zeigt die JP-A-56074060 einen Schneckengetriebeantrieb mit einer Schneckenwelle und einem damit kämmenden Schneckenrad das mit einer Getriebeausgangswelle verbunden ist, sowie einem Abstützrad zur Abstützung der Schneckenwelle auf der dem Schneckenrad gegenüberliegenden Seite, wobei das
Abstützrad zur Abstützung der Schneckenwelle vorgesehen ist, und wobei die Getriebeausgangswelle von dem Schneckenrad auf der dem Abstützrad gegenüberliegenden Seite der Schneckenwelle mit der Getriebeausgangswelle antreibbar ist.

Der vorliegenden Erfindung liegt daher die Aufgabe zugrunde, einen verbesserten Schneckengetriebeantrieb der eingangs genannten Art zu schaffen, der die Nachteile bekannter Antriebe vermeidet, Insbesondere soll der Schneckengetriebeantrieb dahingehend verbessert werden, daß er trotz kleiner und leichter Bauweise großen Belastungen gewachsen ist.

Erfindungsgemäß wird diese Aufgabe bei einem Schneckengetriebeantrieb der eingangs genannten Art dadurch gelöst, daß ein Abstützrad zur Abstützung der Schneckenwelle auf der dem Schneckenrad gegenüberliegenden Seite vorgesehen ist.

Das Abstützrad hat keine Antriebsfunktion, es wälzt zwar auf der Schneckenwelle ab, läuft jedoch leer mit. Die vom Schneckenrad erzeugten, quer auf die Schnekkenwelle einwirkenden Biegekräfte werden von dem gegenüberliegend angeordneten Abstützrad aufgenommen, das für die Schneckenwelle ein Abstützlager bildet und ein Wegbiegen bzw. Ausbauchen der Schneckenwelle verhindert. Das Schneckenrad und die Schneckenwelle geraten auch bei großen Drehmomenten nicht außer Eingriff.

Durch das Abwälzen des Abstützrades auf der Schneckenwelle wird Verschleiß aufgrund der teilweise scharfkantigen Schneckengeometrie, wie er beispielsweise bei nichtabwälzenden Gegenlagern hervorgerufen werden würde, weitgehend verhindert. Zudem werden Reibungsverluste weitgehend vermieden.

In Weiterbildung der Erfindung ist das Abstützrad als Schneckenrad ausgebildet, das mit der Schneckenwelle in kämmendem Eingriff steht. Als Abstützrad käme grundsätzlich auch ein nicht in die Verzahnung der Schneckenwelle eingreifendes Abstützrad in Betracht. Ein mit der Schneckenwelle kämmendes Schneckenrad besitzt als Abstützrad jedoch den Vorteil, daß es nicht nur auf den Stirnseiten der Verzahnungsflanken abläuft und eine verbesserte Aufnahme der abzustützenden Kräfte erreicht wird.

Die Rotationsachsen des Abstützrades und der Schneckenwelle verlaufen entlang zueinander senkrechter Richtungen. Hierdurch wird die Lagerung des Abstützrades vereinfacht insofern als für diese mehr Platz vorhanden ist.

Um keine auf die Schneckenwelle wirkenden Biegemomente entstehen zu lassen, ist das Abstützrad in Weiterbildung der Erfindung dem Schneckenrad unmittelbar gegenüberliegend angeordnet. Durch die Anordnung von Schneckenrad und Abstützrad auf gleicher Höhe entlang der Schneckenwelle fängt das Abstützrad die vom Schneckenrad bewirkten Biegekräfte unmittelbar ab.

Um den Antrieb klein- und leichtbauend sowie kostengünstig auszubilden, ist in vorteilhafter Weise das Schneckenprofil unmittelbar auf die Motorwelle des Antriebsmotors aufgeschnitten. Die Motorwelle bildet also gleichzeitig die Schneckenwelle des Schneckengetriebes.

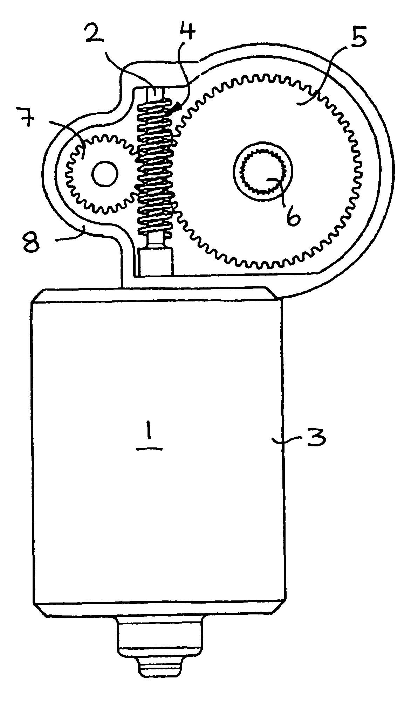

Nachfolgend wird die Erfindung anhand eines bevorzugten Ausführungsbeispieles und einer zugehörigen Zeichnung näher erläutert. Die einzige Zeichnung zeigt einen Schneckengetriebeantrieb für ein Garagentor in einer Seitenansicht gemäß einer bevorzugten Ausführung der Erfindung.

Der Antrieb umfaßt einen Antriebsmotor 1, dessen Motorwelle 2 auf einer Seite aus dem Gehäuse 3 des Antriebsmotors 1 herausragt. Die Motorwelle 2 ist, wie die Figur zeigt, mit einer Schneckenverzahnung 4 versehen, so daß die Motorwelle 2 gleichzeitig die Schneckenwelle des Getriebes bildet.

Das Antriebsdrehmoment der Motorwelle 2 wird von einem Schneckenrad 5 abgegriffen, das mit der Schneckenverzahnung 4 der Motorwelle 2 kämmt und das Antriebsmoment auf eine Getriebeausgangswelle 6 überträgt. Zweckmäßigerweise ist das Getriebe selbsthemmend ausgebildet.

Auf der dem Schneckenrad 5 gegenüberliegenden Seite ist als Abstützrad ein zweites Schneckenrad 7 vorgesehen, das ebenfalls mit der Schneckenverzahnung 4 der Motorwelle 2 kämmt, jedoch keine Antriebsfunktion hat und lediglich leer mitläuft. Das Abstützrad 7 ist drehbar ortsfest gelagert und verhindert ein Wegbiegen der Schneckenwelle 2 von dem Schneckenrad 5. Wie die Figur zeigt, stehen die Achsen des Abstützrades 7 und des Schneckenrades 5 zueinander parallel und sind in Richtung der Längsachse der Motorwelle 2 auf gleicher Höhe angeordnet. Die dem Schneckenrad 5 unmittelbar gegenüberliegende Anordnung des Abstützrades 7 verhindert, daß auf die Schneckenwelle 2 vom Schneckenrad 5 her Biegemomente entstehen können.

Ein Getriebegehäuse 8 umgibt das Schneckenrad 5, das Abstützrad 7 sowie die Schneckenwelle 2 und kann gleichzeitig als Lagerung für die Getriebekomponenten dienen.

## Patentansprüche

1. Garagentorantrieb in Form eines Schneckengetriebes mit einer Schneckenwelle (2) und einem damit kämmenden Schneckenrad (5), das mit einer Getriebeausgangswelle (6) verbunden ist, **gekennzeichnet durch** ein Abstützrad (7) zur Abstützung der Schneckenwelle (2) auf der dem Schneckenrad (5) gegenüberliegenden Seite, wobei das
Abstützrad (7) ausschließlich zur Abstützung der Schneckenwelle vorgesehen und frei mitlaufend ohne Antriebsfunktion ausgebildet ist, wobei die Getriebeausgangswelle nur von dem Schneckenrad (5) auf der dem Abstützrad gegenüberliegenden Seite der Schneckenwelle mit der Getriebeausgangswelle antreibbar ist, und wobei die Getriebeausgangswelle (6) zum Antrieb des Garagentores, vorgesehen ist.

2. Garagentorantrieb nach dem vorhergehenden Anspruch, wobei das Abstützrad (7) als Schneckenrad ausgebildet ist und mit der Schneckenwelle (2) in kämmendem Eingriff steht.

3. Garagentorantrieb nach einem der vorhergehenden Ansprüche, wobei das Abstützrad (7) und das Schneckenrad (5) in Längsrichtung der Schneckenwelle (2) auf gleicher Höhe angeordnet sind.

4. Garagentorantrieb nach einem der vorhergehenden Ansprüche, wobei ein Antriebsmotor (1) mit einer Motorwelle (2) vorgesehen ist und die Motorwelle die Schneckenwelle bildet.

## Claims

1. Garage door drive in the form of a worm mechanism with a worm shaft (2) and a worm wheel (5) which meshes therewith and is connected to a mechanism output shaft (6), **characterized by** a supporting wheel (7) for supporting the worm shaft (2) on the side lying opposite the worm wheel (5), the supporting wheel (7) being provided exclusively for supporting the worm shaft and being designed such that it runs freely at the same time without a driving function, and the mechanism output shaft only being drivable by the worm wheel (5) on that side of the worm shaft which lies opposite the supporting wheel and has the mechanism output shaft, and the mechanism output shaft (6) being provided for driving the garage door.

2. Garage door drive according to the preceding claim, the supporting wheel (7) being designed as a worm wheel and being in meshing engagement with the worm shaft (2).

3. Garage door drive according to one of the preceding claims, the supporting wheel (7) and the worm wheel (5) being arranged at the same height in the longitudinal direction of the worm shaft (2).

4. Garage door drive according to one of the preceding claims, a driving motor (1) with a motor shaft (2) being provided, and the motor shaft forming the worm wheel.

## Revendications

1. Entraînement pour porte de garage sous la forme d'un réducteur à vis sans fin avec un arbre moteur (2) et s'engrenant dans celui-ci, une roue tangente (5) qui est reliée à un arbre de sortie du réducteur (6), **caractérisé en** une roue de maintien (7) destinée au maintien de l'arbre de la vis sans fin (2) sur le côté opposé à la roue tangente (5), la roue de maintien (7) étant exclusivement prévue pour maintenir l'arbre de la vis sans fin et conçue pour tourner conjointement de façon 1-ibre sans fonction d'entraînement, l'arbre de sortie du réducteur pouvant être entraîné uniquement au moyen de la roue tangente (5) sur le côté opposé à la roue de maintien, conjointement avec l'arbre de sortie du réducteur et l'arbre de sortie du réducteur (6) étant prévu pour l'entraînement de la porte de garage.

2. Entraînement pour porte de garage selon la revendication précédente, la roue de maintien (7) étant conformée en roue tangente et s'engrenant dans l'arbre de la vis sans fin (2).

3. Entraînement pour porte de garage selon l'une quelconque des revendications précédentes, la roue de maintien (7) et la roue tangente (5) étant disposées à la même hauteur par rapport au sens longitudinal de l'arbre de la vis sans fin (2).

4. Entraînement pour porte de garage selon l'une quelconque des revendications précédentes, le moteur d'entraînement (1) étant prévu avec un arbre moteur (2) et constituant l'arbre moteur de l'arbre de la vis sans fin.
